# EUROPÄISCHE PATENTANMELDUNG

(11) **EP 4 056 044 A1**
(43) Veröffentlichungstag der Anmeldung: **14.09.2022**
(21) Anmeldenummer: 21161558.8
(22) Anmeldetag: 09.03.2021
(51) Int. Cl.: A23F 5/28, A23F 5/38, A23F 3/16, A23F 3/22, A23F 5/24, A47J 31/36, B65D 85/804, B65D 65/46, A23F 5/12, A23F 3/32

(54) **KAPSEL SOWIE DEREN HERSTELLUNG UND VERWENDUNG**

(71) Anmelder: Delica AG, 5033 Buchs AG (CH)
(72) Erfinder: BAUMANN, Lia, CH-8037 Zürich (CH); GEIGER, Philippe, CH-6004 Luzern (CH); THILLA, Tim, DE-79576 Weil am Rhein (DE); SIEFARTH, Caroline, CH-4054 Basel (CH); AFFOLTER, Roland, CH-5103 Möriken (CH)
(74) Vertreter: Hepp Wenger Ryffel AG

(57) **Zusammenfassung**

Kapsel zur Zubereitung eines Getränks, insbesondere eines Heissgetränks, umfassend
- ein Kernmaterial in Form eines Presslings oder eines Schüttguts, wobei das Kernmaterial eine Getränkesubstanz ist, und
- eine das Kernmaterial ummantelnde Hülle, wobei die Hülle ein Protein umfasst.

## Beschreibung

Die vorliegende Erfindung betrifft Kapseln, welche einen zur Herstellung eines Getränks, insbesondere eines Heissgetränks, geeigneten Inhaltsstoff aufweisen, sowie deren Herstellung und Verwendung.

Die Bereitstellung eines Genussmittels wie Kaffee in Kapselform ist hinlänglich bekannt. Die üblicherweise als Hüllmaterial eingesetzten Werkstoffe wie Kunststoffe oder Aluminium (vgl. z.B. EP-2 106 375 A2) weisen aber den Nachteil auf, dass sie nicht nachhaltig sind.

In der DE 10 2014 000187 B4 wurde vorgeschlagen, einen Pressling zur Herstellung von beispielsweise Kaffee mit einem Hüllmaterial aus einer biologisch abbaubaren Schicht zu ummanteln, wobei es sich bei dieser Schicht um ein Polysaccharid oder ein Derivat davon in Verbindung mit einem polyolen Spacer und einem zugehörigen Vernetzer handelt.

In der EP-3 115 316 B1 ist eine ähnliche Kapsel zur Herstellung von beispielsweise Kaffee beschrieben, wobei das vernetzte Polysaccharid im Hüllmaterial ohne die Verwendung eines polyolen Abstandshalters erhalten wurde. Konkret ist Calciumalginat als Hüllmaterial genannt.

In der US-2013/0136843 A1 wird vorgeschlagen, einen Kern aus Kaffeepulver mit einer Hülle aus verdichtetem Kaffee zu ummanteln.

Die vorstehend genannten Lösungen aus dem Stand der Technik sind noch nicht optimal im Hinblick auf die Bereitstellung einer Kapsel zur Zubereitung eines Heissgetränks unter möglichst ökonomischen, ökologisch verträglichen und herstellungstechnischen Gründen. Ausserdem sind in vielen Fällen die Stabilität der Kapsel und/oder die Sauerstoffbarriere der Kapselhülle mangelhaft.

Es war die Aufgabe der vorliegenden Erfindung, eine Kapsel zur Zubereitung eines Getränks, insbesondere eines Heissgetränks, bereitzustellen, welche die Nachteile des Stands der Technik überwindet.

Diese Aufgabe wird durch den Gegenstand der unabhängigen Ansprüche der vorliegenden Anmeldung gelöst.

Im Einzelnen betrifft die vorliegende Erfindung eine Kapsel zur Zubereitung eines Getränks, insbesondere eines Heissgetränks, umfassend
- ein Kernmaterial in Form eines Presslings oder eines Schüttguts, wobei das Kernmaterial eine Getränkesubstanz ist, insbesondere ausgewählt aus der Gruppe bestehend aus Kaffeepulver, Tee, Kakao, Trinkschokolade, Milchpulver, vegane Milchersatzpulver, Instantkaffee, Kaffee-Ersatz-Produkte und Trockensuppe, und Kombinationen davon, und
- eine das Kernmaterial ummantelnde Hülle, wobei die Hülle ein Protein umfasst.

Gemäss der vorliegenden Erfindung ist das Kernmaterial ausgewählt aus der Gruppe bestehend aus Kaffeepulver, Tee, Kakao, Trinkschokolade, Milchpulver, vegane Milchersatzpulver, Instantkaffee, Kaffee-Ersatz-Produkte und Trockensuppe und Kombinationen davon. Derartige Kernmaterialien sind bekannt und müssen hier nicht näher erläutert werden. Feste und/oder quellbare Materialien haben sich als vorteilhaft gegenüber löslichen Materialien erwiesen, da sich bei der Getränkezubereitung das Material nicht auflöst und die Kapsel bis zum Abschluss der Getränkezubereitung ihre Form im Wesentlichen behält.

Das Kernmaterial kann in Form eines Presslings oder als Schüttgut vorliegen. Das Kernmaterial in Form von Schüttgut eignet sich für die herkömmliche Befüllung einer im Wesentlichen festen Hülle. Ebenso kann jedoch das Schüttgut auch in einer flexiblen Hülle, beispielsweise ähnlich einem Schlauchbeutel, verpackt werden. Das Schüttgut wird dann durch die Hülle zusammen gehalten.

Unter einem "Pressling" wird gemäss der vorliegenden Erfindung ein Kernmaterial verstanden, das unter Druck verdichtet wurde. Die Bereitstellung des Kernmaterials der Kapsel als Pressling ist besonders vorteilhaft, wenn das Kernmaterial durch Eintauchen, Überziehen oder Besprühen mit dem Hüllmaterial ummantelt wird, so dass das Kernmaterial während des Ummantelungsvorgangs nicht zerfällt. Das Kernmaterial weist daher vorzugsweise eine bestimmte Festigkeit auf. Dies kann vorzugsweise dadurch erreicht werden, dass die Verdichtung des Kernmaterials mit einem Kompressionsdruck im Bereich von 1-100 MPa, bevorzugt 5-50 MPa, durchgeführt wird. Der resultierende Pressling mit Hülle weist dann vorzugsweise eine Festigkeit im Bereich von 10-300 N, bevorzugt 50-250 N, besonders bevorzugt 75-225 N, auf.

Der zur Herstellung des Presslings anzulegende Kompressionsdruck ist abhängig von den Eigenschaften des Kernmaterials, im Fall von Kaffeepulver beispielsweise vom Mahlgrad, Röstgrad und Feuchtigkeitsgehalt des Pulvers. Insbesondere bei Kaffeepulver kann beobachtet werden, dass Pulver mit kleinerem Fett- oder Ölanteil, z.B. entkoffeiniertes Kaffeepulver, einen höheren Kompressionsdruck bedingt, um einen stabilen Pressling zu erzielen.

Die Festigkeit des Presslings wird bestimmt, indem der Pressling zwischen zwei Platten eingespannt und die erforderliche Kraft zum Zerstossen des Presslings bestimmt wird. Diese Methode ist auch in der WO 2008/123775 A1, S.3 beschrieben.

Die Herstellung der Kapsel kann auf übliche Weise erfolgen, indem ein Pressling des gewünschten Kernmaterials auf herkömmliche Weise mit dem Hüllmaterial ummantelt wird, insbesondere durch Eintauchen, Überziehen oder Besprühen.

Das erfindungsgemäss zu verwendende Hüllmaterial umfasst ein Protein. Eine Hülle aus einem Protein weist eine hohe natürliche Barriere gegenüber Sauerstoff auf. Entsprechend kann die Haltbarkeit des Kernmaterials erhöht werden. Ausserdem sind mit einem Hüllmaterial mit Protein mechanische Eigenschaften der Hülle in einem weiten Bereich den Anforderungen entsprechend modifizierbar. So kann beispielsweise die Bruchfestigkeit der Kapsel eingestellt werden. Ausserdem kann das visuelle Erscheinungsbild, insbesondere die Farbe, der Glanz, die Homogenität der Oberfläche, je nach Wahl des verwendeten Proteins angepasst werden. Ebenso kann das Protein als Träger von aktiven Substanzen, wie beispielsweise antimikrobielle Mittel, eingesetzt werden.

Das Hüllmaterial ist vorzugsweise derart ausgebildet, dass es sich bei der Getränkezubereitung, insbesondere bei der Zubereitung eines Heissgetränks nicht auflöst. Bei einer Extraktion mit bis zu 100 °C heissem Wasser und einer Extraktionszeit bis zu 3 min behält somit die Hülle eine stabile Form, so dass die Kapsel nach der Getränkezubereitung problemlos aus einer Getränkezubereitungsmaschine ausgeworfen oder entfernt werden kann.

Die Hülle kann einen Proteinanteil von wenigstens 10 % w/w bezogen auf die Trockensubstanz aufweisen. Insbesondere bei einer Hülle aus einem im Wesentlichen reinen Proteinfilm, gegebenenfalls unter Zusatz von Weichmachern kann der Proteinanteil bevorzugt zwischen 30 % bis 100 % w/w, besonders bevorzugt zwischen 50 % bis 80 % w/w betragen. Somit kann eine sehr hohe Sauerstoffbarriere erreicht werden. Ausserdem sind mechanische und visuelle Eigenschaften einfach zu variieren. Bei einer Hülle im Wesentlichen aus einem Alginat-Proteinfilm, gegebenenfalls unter Zusatz von Weichmachern und/oder Cellulose, kann der Proteinanteil bevorzugt zwischen bevorzugt zwischen 10 % bis 60 % w/w, besonders bevorzugt zwischen 10 % bis 40 % w/w betragen. Eine solche Hülle lässt sich wesentlich leichter auftragen als ein im Wesentlichen reiner Proteinfilm.

Das Protein der Hülle kann ausgewählt sein aus der Gruppe bestehend aus tierischen Proteinen, wie beispielsweise Molkenprotein Caseine, Gelatine, Keratine, Eiprotein (Eialbumin), Silk Fibroin, Proteinen aus Hefen, und pflanzlichen Proteinen, wie beispielsweise Kartoffelprotein, Maisprotein, Erbsenprotein, Reisprotein, Sojaprotein, Lupinenprotein, Weizenprotein, Rapsprotein, Kürbisprotein, Erdnuss, Mandel, Nussprotein (beispielsweise Pecan, Wallnuss, Haselnuss, Macadamia, Cashew), Linsenprotein, Kicherebsenprotein, Bohnenprotein, Quinoiaprotein, Amaranthprotein, Sonnenblumenkernprotein, Haferprotein, Hanfprotein und Kombinationen unterschiedlicher tierischer und/oder pflanzlicher Proteine. Je nach verwendetem Protein ist die Verarbeitung unterschiedlich und auch die Eigenschaften der Hülle und entsprechend der Kapsel können unterschiedlich ausfallen.

So sind beispielsweise Erbsenproteine sehr gut verarbeitbar und gut verfügbar, da sie schon in einigen Lebensmitteln eingesetzt werden. Erbsenprotein ist zudem relativ günstig und kaum genetisch verändert. Erbsenprotein gilt nicht als Allergen und ist sowohl für die vegetarische als auch vegane Ernährung zugelassen.

Molkenprotein ist gut verfügbar und preislich interessant, es ist ein industrielles Nebenprodukt. Mit Molkenproteinen kann eine Hülle mit ansprechender Optik erzielt werden. Die Dosierung im Prozess ist in geringen Mengen möglich. Nachteilig ist die Allergenität von Molkenproteinen. Es handelt sich um ein tierisches Produkt und ist somit für die vegane Ernährung nicht geeignet.

Der Vorteil von Maisprotein ist die hervorragende Stabilität der damit erzielten Hülle. Mais kann sich mit dem Kernmaterial, insbesondere Kaffee, verbinden. Ausserdem ist Maisprotein nicht wasserlöslich und entsprechend schwierig aufzubringen. Maisprotein ist pflanzlichen Ursprungs, kann jedoch genmanipuliert sein.

Das Protein der Hülle kann vernetzt sein. Durch ein Vernetzen werden die mechanischen Eigenschaften der Hülle beeinflusst. Insbesondere wird die Stabilität der Hülle verbessert. Ebenso ist es aber auch denkbar, dass ein nicht vernetztes oder nicht vernetzendes Protein verwendet wird.

Die Hülle der Kapsel kann kompostierbar sein. Somit muss die Kapsel nach Extraktion eines Getränkes nicht mit dem Haushaltmüll entsorgt werden, sondern kann Kompostiert werden. Es werden dabei sowohl das verbrauchtet Getränkesubstrat als auch die Hülle der Kapsel dem biologischen Kreislauf wieder zugeführt.

Unter "kompostierbar" wird dabei verstanden, dass das Material gemäss den Zertifizierungsprogrammen NF T 51-800:2015-11-14 (Plastics - Specifications for plastics suitable for home composting) und AS 5810:2010 (Biodegradable plastics - Biodegradable plastics suitable for home composting) zumindest heimkompostierbar ist. Dies bedeutet eine Zersetzung (biodegradation) von mindestens 90 % des Materials unter Freisetzung von CO₂ innerhalb von 12 Monaten bei einer Temperatur von 25 ± 5 °C sowie eine Fragmentierung (desintegration) von mindestens 90 % des Materials innerhalb von 6 Monaten bei einer Temperatur von 25 ± 5 °C.

Die Hülle kann aus 1-20 Schichten, vorzugsweise 2-10 Schichten und besonders bevorzugt 2-5 Schichten aufgebaut sein, wobei die Schichten dasselbe Protein mit gleichem oder unterschiedlichem Anteil oder unterschiedliche Proteine mit gleichem oder unterschiedlichem Anteil aufweisen können. Durch den mehrschichtigen Aufbau können die Eigenschaften, insbesondere die mechanischen Eigenschaften (beispielsweise Dichtigkeit, Quellfähigkeit, Verformbarkeit), der Hülle in einem breiten Bereich modifiziert und eingestellt werden.

Dabei ist es denkbar, dass wenigstens eine oder mehrere Schichten ohne Protein aufgebaut sind und, insbesondere wenigstens ein Polysaccharid, bevorzugt Natriumalginat oder Calciumalginat, umfasst. Dabei kann eine ein Protein umfassende Schicht zwischen zwei Schichten ohne Protein angeordnet sein. Durch die Verwendung von Schichten ohne Protein und deren Reihenfolge sind noch weitere Modifikationen der Eigenschaften der Hülle möglich.

Die erfindungsgemässe Kapsel kann in ihrer Gestalt verschiedene Formen aufweisen. Eine Vielzahl solcher Formen sind im Stand der Technik für entsprechende Kapseln im relevanten technischen Gebiet bereits bekannt. So kann die Kapsel beispielsweise die Form ausgewählt aus der Gruppe umfassend Würfel, Quader, Prisma, Pyramide, Pyramidenstumpf, Zylinder, Kegel, Kegelstumpf, Torus, Kugel, Ellipsoid, Kaffeebohne aufweisen. Bevorzugt ist die Kapsel kugelförmig. Die Kapsel kann optimal an eine Maschine zur Zubereitung eines Getränks oder an den entsprechenden Zubereitungsprozess angepasst werden.

Die erfindungsgemässe Kapsel hat eine Kern-Hülle-Struktur, d.h. ein Kern aus einem Material (Kernmaterial) ist von einer Hülle aus einem anderen Material (Hüllmaterial) ummantelt. Die Hülle kann ohne Nahtstelle gebildet sein, wenn sie nicht (wie beispielsweise Hartkapseln) aus mehreren Teilen zusammengefügt wird. Die Hülle kann aber auch aus zwei oder mehreren Teilen gebildet sein. Die Hülle kann eine oder mehrere Nahtstellen aufweisen.

Die Hülle kann am Kernmaterial anhaften oder das Kernmaterial lose umschliessen.

Die Hülle kann eine Schwächungslinie aufweisen, an welcher ein Öffnen der Hülle vereinfacht möglich ist. Eine solche Schwächungslinie ist dann vorteilhaft, wenn die Hülle in einer Getränkezubereitungsmaschine einseitig zum Einführen einer Flüssigkeit angestochen wird und an einer anderen Stelle zum Ableiten der Flüssigkeit durch ihren Innendruck geöffnet werden soll. Die Schwächungslinie kann durch eine Nahtstelle gebildet sein.

Ein weiterer Aspekt der vorliegenden Erfindung betrifft ein Verfahren zur Herstellung einer Kapsel, insbesondere gemäss der vorhergehenden Beschreibung, umfassend die Schritte:
a) Bereitstellen eines Kernmaterials, ausgewählt aus der Gruppe bestehend aus Kaffeepulver, Tee, Kakao, Trinkschokolade, Milchpulver, vegane Milchersatzpulver, Instantkaffee, Kaffee-Ersatz-Produkte und Trockensuppe und Kombinationen davon,
b) Verdichten des Kernmaterials zu einem Pressling,
c) Bereitstellen eines Systems, insbesondere eines wässrigen Systems, umfassend ein Protein, insbesondere ausgewählt aus der Gruppe bestehend aus pflanzlichen Proteinen, tierischen Proteinen und Proteinen aus Hefen und Kombinationen davon, wie vorgängig zur Kapsel erläutert,
d) Aufbringen des Systems auf die Oberfläche des Presslings, insbesondere durch Eintauchen, Überziehen oder Besprühen,
e) Trocknen des beschichteten Presslings.

Die Bereitstellung eines Systems, insbesondere eines wässrigen Systems, umfassend ein Protein kann auf übliche Weise erfolgen, indem eine Lösung, insbesondere eine wässrige Lösung, mit dem entsprechenden Proteinpulver vermischt wird. Die Vermischung kann durch übliche Massnahmen wie Rühren, Erwärmen, Einstellung des pH-Bereichs zur Erhöhung der Löslichkeit des Proteinpulvers, beispielsweise durch Zugabe einer Säure oder Base, oder einer Kombination derartiger Massnahmen unterstützt beziehungsweise ermöglicht werden. Das wässrige System kann zusätzlich mit wenigstens einem Polysaccharid angereichert werden.

Dabei wird unter einem System nicht nur ein wässriges System (d.h. ein ausschliesslich Wasser als Lösungsmittel umfassendes System) verstanden. Ebenso ist es denkbar, dass das System ein Lösungsmittelgemisch aus Wasser und einer wassermischbaren Lösung, beispielsweise aus niederkettigem (z.B. C1-8), physiologisch akzeptablem Alkohol, wie Ethanol, ist. Ebenso ist es denkbar, dass zum Erstellen des wässrigen Systems anstelle von Wasser als Lösungsmittel ein Kaffeeextrakt beispielsweise von einem gebrühten Kaffee oder von einem Instantkaffee verwendet wird.

Auf diese Weise wird ein System in Form einer Lösung, insbesondere einer wässrigen Lösung, mit einer Konzentration an Protein zwischen 1 % und 40 % w/w, vorzugsweise zwischen 1 % und 35 % w/w, besonders bevorzugt zwischen 1 % und 30 % w/w, bereitgestellt, bezogen auf das Gesamtgewicht des Systems.

Erfindungsgemäss bevorzugt wird ein System in Form einer Lösung, insbesondere einer wässrigen Lösung, mit einer Konzentration an Erbsenprotein zwischen 1 % und 20 % w/w, vorzugsweise zwischen 5 % und 15 % w/w, besonders bevorzugt zwischen 8 % und 11 % w/w, bereitgestellt, bezogen auf das Gesamtgewicht des Systems.

Alternativ wird ein System in Form einer Lösung, insbesondere einer wässrigen Lösung, mit einer Konzentration an Maisprotein zwischen 1 % und 30 % w/w, vorzugsweise zwischen 10 % und 30 % w/w, besonders bevorzugt zwischen 20 % und 30 % w/w, bereitgestellt, bezogen auf das Gesamtgewicht des Systems.

Weiter alternativ wird ein System in Form einer Lösung, insbesondere einer wässrigen Lösung, mit einer Konzentration an Molkenprotein zwischen 1 % und 20 % w/w, vorzugsweise zwischen 5 % und 15 % w/w, besonders bevorzugt zwischen 8 % und 11 % w/w, bereitgestellt, bezogen auf das Gesamtgewicht des Systems.

Weiter alternativ wird ein System in Form einer Lösung, insbesondere einer wässrigen Lösung, mit einer Konzentration an Kartoffelprotein zwischen 1 % und 20 % w/w, vorzugsweise zwischen 2 % und 18 % w/w, besonders bevorzugt zwischen 4 % und 17 % w/w, bereitgestellt, bezogen auf das Gesamtgewicht des Systems.

Ein System kann in Form einer Lösung, insbesondere einer wässrigen Lösung, mit Alginaten, mit einer Konzentration an Protein zwischen 0.1 % und 5 % w/w, vorzugsweise zwischen 0.5 % und 4 % w/w, besonders bevorzugt zwischen 1 % und 3 % w/w, bereitgestellt werden, bezogen auf das Gesamtgewicht des Systems. Gemäss einer bevorzugten Ausführungsform wird für den Schritt der Bereitstellung eines wässrigen Systems umfassend ein Protein enthärtetes oder entmineralisiertes Wasser eingesetzt.

Das System kann zusätzliche Additive umfassen, um die Eigenschaften des aufzubringenden Hüllmaterials zu modifizieren. Beispielsweise seien Weichmacher wie Glycerin, Sorbitol, Polyethylenglycol (PEG) oder einer Kombination dieser Weichmacher genannt. Derartige Additive werden üblicherweise dem wässrigen System in Mengen von 0,1 bis 15 % w/w, vorzugsweise 0,2 bis 15 % w/w und besonders bevorzugt 0,5 bis 15 % w/w zugegeben, bezogen auf das Gesamtgewicht des Systems.

Das derart bereitgestellte System kann auf übliche Weise auf die Oberfläche des Presslings aufgebracht werden, insbesondere durch Eintauchen, Überziehen oder Besprühen.

Die Ummantelung des gewünschten Kernmaterials mit dem Hüllmaterial kann durch Eintauchen des Presslings in das vorstehend beschriebene System erfolgen. Beispielsweise kann der Pressling über eine geeignete Aufhängung in das System eingebracht werden, wo er für eine gewünschte Zeit verbleibt, beispielsweise für 1 bis 60 s, vorzugsweise 2 bis 30 s, besonders bevorzugt 3 bis 10 s. Andere Methoden zur Beschichtung in einem Tauchbad, beispielsweise mit einer festen Position im Tauchbad oder einer rollenden Fortbewegung durch das Tauchbad, sind denkbar.

Der Schritt des Aufbringens des wässrigen Systems auf die Oberfläche des Presslings kann wiederholt mit demselben System oder unterschiedlichen Systemen, insbesondere wässrigen Systemen, durchgeführt werden. Es können somit 1-20 Schichten, vorzugsweise 2-10 Schichten und besonders bevorzugt 2-5 Schichten, auf der Oberfläche des Presslings erzeugt werden.

Der Schritt des Aufbringens des wässrigen Systems auf die Oberfläche des Presslings kann auch wiederholt mit unterschiedlichen Systemen, insbesondere wässrigen Systemen, ohne Protein durchgeführt werden. Somit können die Eigenschaften der Hülle weiter modifiziert werden.

Der Schritt des Trocknen des beschichteten Presslings kann nach jedem einzelnen Aufbringen eines wässrigen Systems oder nach einer gewissen Anzahl aufgebrachter wässriger Systeme wiederholt werden.

Beim Aufbringen von mehreren Schichten kann die Art des Beschichtungsprozesses jeweils dieselbe sein, oder alternativ können unterschiedliche Beschichtungsprozesse angewandt werden.

Der beschichtete Pressling wird nach dem letzten Beschichtungsschritt und/oder zwischen einem oder mehreren einzelnen Beschichtungsschritten einem Trocknungsprozess unterworfen. Diese Trocknung kann auf herkömmliche Art erfolgen. Erfindungsgemäss bevorzugt wird die Trocknung im Luftstrom, durch Konvektions- und/oder Kontakttrocknung durchgeführt. Beispielhaft seien Hordentrocknung mit Warmluft, IR-Trocknung (Trocknung durch Bestrahlung mit IR-Strahlung) und Mikrowellentrocknung (Trocknung durch Bestrahlung mit Mikrowellen) genannt. Die hierfür angewendeten Temperaturen liegen bei Normaldruck üblicherweise im Bereich von 10 bis 40 °C, vorzugsweise 15 bis 25°C, in der Regel unterhalb 50°C.

Die Prozessschritte der Beschichtung und Trocknung benötigen je Schicht zusammen üblicherweise eine Dauer von 2 min bis 20 min, vorzugsweise 5 min bis 10 min. Je nach Art der aufgebrachten Schichten und deren Anzahl kann aber auch eine Dauer von 20 min bis 240 min, bevorzugt 40 min bis 80 min nötig sein.

Gemäss einer Ausführungsform der vorliegenden Erfindung können die Beschichtung des Presslings und die anschliessende Trocknung in einem Prozessschritt durchgeführt werden, wenn die Beschichtung auf bekannte Weise durch eine Sprühbeschichtung in einem Wirbelschichtverfahren erfolgt. Die hierfür angewendeten Temperaturen liegen üblicherweise im Bereich von 25 bis 80 °C.

Das Verdichten des Kernmaterials kann mit einem Kompressionsdruck im Bereich von 1-100 MPa, bevorzugt 5-50 MPa, erfolgen.

Die erfindungsgemässe Kapsel kann zur Zubereitung eines Getränks, insbesondere eines Heissgetränks, ausgewählt aus der Gruppe umfassend Kaffee, Kaffee-Ersatz, Tee, Kakao, Trinkschokolade, Milch, vegane Milch oder Suppe, oder Kombinationen davon, verwendet werden.

Es ist erfindungsgemäss bevorzugt, dass die Zubereitung des Getränks durch Extraktion der Kapsel mit einer insbesondere heissen Flüssigkeit ausgewählt aus der Gruppe bestehend aus Wasser, Milch, Kaffeeextrakt oder Kombinationen erfolgt.

Entsprechende Zubereitungsverfahren und Vorrichtungen hierfür sind aus dem Stand der Technik bekannt.

Ein System zur Zubereitung eines Getränkes umfasst eine Kapsel wie vorgängig beschrieben und eine Maschine zur Aufnahme und zur Extraktion der Kapsel mit einer insbesondere heissen Flüssigkeit ausgewählt aus der Gruppe bestehend aus Wasser, Milch, Kaffeeextrakt oder Kombinationen davon.

Für die nachfolgend aufgeführten Beispiele wurde jeweils ein kugelförmiger Pressling für die Kaffeezubereitung durch Verdichten von 6.2 g geröstetem gemahlenen Kaffeepulver bei 30 MPa in einer Presse hergestellt. Das Kaffeepulver wies einen Feuchtigkeitsgrad von 3.5 % auf. Die mittlere Korngrösse des Kaffeepulvers betrug 400 µm ± 100 µm. Bei allen Beispielen wurde ein OTR-Wert der Hülle unter 5 cm³/(m²*d*1,0 bar) gemessen. Die oberflächenbereinigte Oxygen Transmission Rate (OTR) gibt an, welche Menge an Sauerstoff pro Flächen- und Zeiteinheit durch die Hülle diffundiert. Die Herstellung einer wässrigen Lösung und das Ummanteln des Presslings werden im jeweiligen Beispiel beschrieben.

### Beispiel 1 (nur Protein + Glycerin): Mais

Eine Lösung aus 23.8 % entmineralisiertem Wasser, 58.8 % Ethanol und 17.5 % w/w Maisprotein (CPI) (FloZein F4400C Series, FloZein Products USA) wurde hergestellt. Die CPI-Lösung wurde bei 40 °C für 30 Minuten erhitzt und dabei bei 50 U/min gemischt. Die Lösung wurde anschliessend auf Zimmertemperatur mit 66 % Glycerin (bezogen pro Gramm CPI) versetzt.

Der Pressling wurde 6 s in die wässrige CPI-Lösung eingetaucht und ca. 6 min bei 25 °C im Luftstrom getrocknet. Anschliessend wurde der Pressling ein zweites Mal für 6 s in die CPI-Lösung eingetaucht und danach für 15 min bei 25 °C getrocknet.

Nach dem Trocknen betrug die Bruchfestigkeit des beschichteten Balles 103 N.

### Beispiel 2 (nur Protein + Glycerin): Erbse

Eine wässrige Lösung aus entmineralisiertem Wasser und einer Konzentration des Erbsenproteinisolats (PPI) (PDS Empro E 86 HV, Emsland Group, Deutschland) von 10 % w/w wurde hergestellt. Die PPI-Lösung wurde bei 90 °C für 30 Minuten erhitzt und dabei bei 50 U/min gemischt. Die Lösung wurde anschliessend auf Zimmertemperatur mit 60 % Glycerin (bezogen pro Gramm PPI) versetzt.

Der Pressling wurde 6 s in die wässrige PPI-Lösung eingetaucht und ca. 6 min bei 25 °C im Luftstrom getrocknet. Anschliessend wurde der Pressling ein zweites Mal für 6 s in die PPI-Lösung eingetaucht und danach für 15 min bei 25 °C getrocknet.

Nach dem Trocknen betrug die Bruchfestigkeit des beschichteten Balles 50 N.

### Beispiel 3 (Protein + Alginat + Glycerin): Molke

Eine wässrige Lösung aus entmineralisiertem Wasser und einer Konzentration des Molkenproteinisolats (WPI) BiPro 9500, Agropure Ingredients Inc, USA) von 10 % w/w wurde hergestellt. Die WPI-Lösung wurde bei 90 °C für 20 Minuten erhitzt und dabei bei 50 U/min gemischt.

Anschliessend wurde eine wässrige Lösung aus entmineralisiertem Wasser und Natriumalginat (VIVAPUR Sodium Alginate, medium viscosity, JRS, Deutschland) bereitgestellt. Dabei wurde ein System in Form einer wässrigen Lösung mit einer Konzentration an Natriumalginat von 1.7 % w/w bezogen auf das Gesamtgewicht der wässrigen Lösung hergestellt.

Die WPI-Lösung und die Alginat-Lösung wurden daraufhin im Verhältnis 1/9 gemischt um eine Lösung mit 1 % Proteinanteil zu erhalten.

Die Lösung wurde anschliessend mit 2 % Glycerin (bezogen auf das Gesamtgewicht der wässrigen Lösung) versetzt.

Der Pressling wurde 6 s in die wässrige WPI-Alginat-Lösung eingetaucht und anschliessend 10 s in eine Calciumchlorid Lösung mit der Konzentration von 5 % w/w getaucht. Anschliessend wurde der Kaffeepressling bei 25 °C im Luftstrom getrocknet. Darauffolgend wurde der Pressling ein zweites Mal für 6 s in die WPI-Alginat-Lösung eingetaucht und anschliessend 10 s in eine Calciumchlorid Lösung mit der Konzentration von 5 % w/w getaucht. Danach wurde der Kaffeepressling für 15 min bei 25°C getrocknet.

Nach dem Trocknen betrug die Bruchfestigkeit des beschichteten Balles 179 N.

### Beispiel 4 (Protein + Alginat + Sorbitol): Erbse

Eine wässrige Lösung aus entmineralisiertem Wasser und einer Konzentration des Erbsenproteinisolats (PPI) von 10 % w/w wurde hergestellt. Die Proteinlösung (PDS Empro E 86 F30, Emsland Group, Deutschland) wurde bei 90 °C für 20 Minuten erhitzt und dabei bei 50 U/min gemischt.

Anschliessend wurde eine wässrige Lösung aus entmineralisiertem Wasser, Natriumalginat (VIVAPUR Sodium Alginate, medium viscosity, JRS, Deutschland) und der Proteinlösung bereitgestellt. Dabei wurde ein System in Form einer wässrigen Lösung mit einer Konzentration an Natriumalginat von 1.7 % w/w bezogen auf das Gesamtgewicht der wässrigen Lösung hergestellt.

Die PPI-Lösung und die Alginat-Lösung wurden daraufhin im Verhältnis 3/7 gemischt um eine Lösung mit 3 % Proteinanteil zu erhalten.

Die Lösung wurde anschliessend mit 3.5 % Sorbitol (bezogen auf das Gesamtgewicht der wässrigen Lösung) versetzt.

Der Pressling wurde 6 s in die wässrige PPI-Alginat-Lösung eingetaucht und anschliessend 10 s in eine wässrige Calciumchlorid Lösung mit der Konzentration von 5 % w/w getaucht. Anschliessend wurde der Kaffeepressling bei 25 °C im Luftstrom getrocknet. Anschliessend wurde der Pressling ein zweites Mal für 6 s in die PPI-Alginat-Lösung eingetaucht und anschliessend 10 s in eine Calciumchlorid Lösung mit der Konzentration von 5 % w/w getaucht. Danach wurde der Kaffeepressling für 15 min bei 25 °C getrocknet.

Nach dem Trocknen betrug die Bruchfestigkeit des beschichteten Balles 168 N.

## Patentansprüche

1. Kapsel zur Zubereitung eines Getränks, insbesondere eines Heissgetränks, umfassend
- ein Kernmaterial in Form eines Presslings oder eines Schüttguts, wobei das Kernmaterial eine Getränkesubstanz ist, insbesondere ausgewählt aus der Gruppe bestehend aus Kaffeepulver, Tee, Kakao, Trinkschokolade, Milchpulver, vegane Milchersatzpulver, Instantkaffee, Kaffee-Ersatz-Produkte und Trockensuppe, und Kombinationen davon, und
- eine das Kernmaterial ummantelnde Hülle, wobei die Hülle ein Protein umfasst.

2. Kapsel nach Anspruch 1, wobei die Hülle einen Proteinanteil von wenigstens 10 % w/w aufweist.

3. Kapsel nach Anspruch 1 oder 2, wobei das Protein der Hülle ausgewählt ist aus der Gruppe bestehend aus tierischen Proteinen, pflanzlichen Proteinen und Proteinen aus Hefen und Kombinationen unterschiedlicher tierischer und/oder pflanzlicher Proteine.

4. Kapsel nach einem der Ansprüche 1 bis 3, wobei die Hülle kompostierbar ist.

5. Kapsel nach einem der Ansprüche 1 bis 4, wobei die Hülle aus 1-20 Schichten, vorzugsweise 2-10 Schichten und besonders bevorzugt 2-5 Schichten aufgebaut ist, wobei die Schichten dasselbe Protein mit gleichem oder unterschiedlichem Anteil oder unterschiedliche Proteine mit gleichem oder unterschiedlichem Anteil aufweisen.

6. Kapsel nach einem der Ansprüche 1 bis 4, wobei die Hülle aus 1-20 Schichten, vorzugsweise 2-10 Schichten und besonders bevorzugt 2-5 Schichten aufgebaut ist, wobei wenigstens eine oder mehrere Schichten ohne Protein aufgebaut ist und, insbesondere wenigstens ein Polysaccharid, bevorzugt Natriumalginat oder Calciumalginat, umfasst.

7. Kapsel nach Anspruch 6, wobei eine ein Protein umfassende Schicht zwischen zwei Schichten ohne Protein angeordnet ist.

8. Kapsel nach einem der Ansprüche 1 bis 7, wobei die Kapsel eine Form ausgewählt aus der Gruppe umfassend Würfel, Quader, Prisma, Pyramide, Pyramidenstumpf, Zylinder, Kegel, Kegelstumpf, Torus, Kugel, Ellipsoid, Kaffeebohne, ausgestaltet ist.

9. Kapsel nach einem der Ansprüche 1 bis 8, wobei die das Kernmaterial ummantelnde Hülle keine, eine oder mehrere Nahtstellen aufweisen.

10. Kapsel nach einem der Ansprüche 1 bis 9, wobei die das Kernmaterial ummantelnde Hülle eine Schwächungslinie aufweist, welche ein Öffnen der Kapsel vereinfacht.

11. Verfahren zur Herstellung einer Kapsel, insbesondere gemäss einem der vorhergehenden Ansprüche, umfassend die Schritte:
a) Bereitstellen eines Kernmaterials, ausgewählt aus der Gruppe bestehend aus Kaffeepulver, Tee, Kakao, Trinkschokolade, Milchpulver, vegane Milchersatzpulver, Instantkaffee, Kaffee-Ersatz-Produkte und Trockensuppe und Kombinationen davon,
b) Verdichten des Kernmaterials zu einem Pressling,
c) Bereitstellen eines Systems, insbesondere eines wässrigen Systems, umfassend ein Protein, insbesondere ausgewählt aus der Gruppe bestehend aus tierischen Proteinen, pflanzlichen Proteinen und Proteinen aus Hefen und Kombinationen unterschiedlicher tierischer und/oder pflanzlicher Proteine und/oder Proteine aus Hefen,
d) Aufbringen des Systems auf die Oberfläche des Presslings, insbesondere durch Eintauchen, Überziehen oder Besprühen,
e) Trocknen des beschichteten Presslings.

12. Verfahren nach Anspruch 11, wobei der Schritt d) und insbesondere der Schritt e) wiederholt mit demselben System oder unterschiedlichen Systemen, insbesondere wässrigen Systemen, durchgeführt wird, um 1-20 Schichten, vorzugsweise 2-10 Schichten und besonders bevorzugt 2-5 Schichten, auf der Oberfläche des Presslings zu erzeugen.

13. Verfahren nach Anspruch 11 oder 12, wobei der Schritt d) und insbesondere der Schritt e) wiederholt mit einem unterschiedlichen System, insbesondere wässrigen Systemen, ohne Protein durchgeführt wird.

14. Verfahren nach einem der Ansprüche 11 bis 13, wobei das Verdichten des Kernmaterials mit einem Kompressionsdruck im Bereich von 1-100 MPa, bevorzugt 5-50 MPa, erfolgt.

15. Verfahren nach einem der Ansprüche 11 bis 14, wobei das wässrige System zusätzlich einen Weichmacher, insbesondere Glycerin und/oder Sorbitol und/oder Polyethylenglycol, enthält.

16. Verfahren nach einem der Ansprüche 11 bis 15, wobei Schritt e) im Luftstrom, durch Konvektions- und/oder Kontakttrocknung durchgeführt wird.

17. Verfahren nach einem der Ansprüche 11 bis 16, wobei das wässrige System in Form einer wässrigen Lösung, mit Alginaten, mit einer Konzentration an Protein zwischen 0.1 % und 5.0 % w/w, vorzugsweise zwischen 0.5 % und 4.0 % w/w, besonders bevorzugt zwischen 1.0 % und 3.0 % w/w, bereitgestellt wird, bezogen auf das Gesamtgewicht des wässrigen Systems.

18. Verwendung einer Kapsel gemäss einem der Ansprüche 1 bis 10 zur Zubereitung eines Getränks, insbesondere Heissgetränks, ausgewählt aus Kaffee, Tee, Kakao, Trinkschokolade, Milch oder Suppe, oder Kombinationen davon.

19. Verwendung nach Anspruch 18, wobei die Zubereitung des Getränks durch Extraktion der Kapsel mit einer insbesondere heissen Flüssigkeit ausgewählt aus der Gruppe bestehend aus Wasser, Milch, Kaffeeextrakt oder Kombinationen davon erfolgt.
